(19) Europäisches Patentamt
European Patent Office
Office européen des brevets

(11) Publication number: **0 072 158**
**B1**

(12) **EUROPEAN PATENT SPECIFICATION**

(45) Date of publication of patent specification: **30.03.88**

(51) Int. Cl.$^4$: **C 07 C 91/26,** C 08 F 20/36, C 08 F 12/26, C 09 D 3/74

(21) Application number: **82304030.8**

(22) Date of filing: **30.07.82**

(54) **Quaternary ammonium compounds containing surfactant anions, polymers thereof, polymerisable compositions containing them, methods of making the monomers and polymers and articles containing polymer.**

(30) Priority: **07.08.81 US 291010**

(43) Date of publication of application:
**16.02.83 Bulletin 83/07**

(45) Publication of the grant of the patent:
**30.03.88 Bulletin 88/13**

(84) Designated Contracting States:
**AT BE CH DE FR GB IT LI NL SE**

(56) References cited:
**GB-A-1 143 761**
**US-A-3 678 098**

**Römpps Chemie-Lexikon, pp. 3494-3498, 7. Auflage, Stuttgart, 1977**

**The file contains technical information submitted after the application was filed and not included in this specification**

(73) Proprietor: **Rohm and Haas Company**
**Independence Mall West**
**Philadelphia, Pennsylvania 19105 (US)**

(72) Inventor: **Hutton, Thomas Watkins**
**153 Woodview drive**
**Doylestown Pennsylvania 18901 (US)**
Inventor: **Merritt, Richard Foster**
**18 Shelly Lane**
**Fort Washington Pennsylvania 19034 (US)**

(74) Representative: **Angell, David Whilton et al**
**ROHM AND HAAS (UK) LTD. European Operations Patent Department**
**Lennig House 2 Mason's Avenue**
**Croydon CR9 3NB (GB)**

**EP 0 072 158 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention is concerned with quaternary ammonium compounds containing surfactant anions, polymers thereof, polymerisable compositions containing them, methods of making the monomers and polymers and articles containing polymer. More specifically the monomers contain ethylenic unsaturation together with halohydroxypropyl or glycidyl groups which give the polymers low energy cure characteristics. Polymers according to the invention are useful, inter alia, in coating, binding and adhesive compositions.

Lewis et al US—A—3,678,098 and US—A—3,702,799 disclose quaternary ammonium monomers (and polymers therefrom) which contain ethylenic unsaturation together with halohydroxypropyl or glycidyl groups. However such prior art compounds lack surfactant anions. The monomers referred to in Lewis et al are generally cationic and not compatible with anionic systems. Surprisingly the compounds of the invention, by virtue of the surfactant anions therein, are compatible with anionic systems and are thus useful in binder, coating and adhesive formulations which in commercial practice almost always contain anionic compounding agents. The monomers of the Lewis et al patent specifications are generally water soluble salts which are insoluble in many organic solvents and potential comonomers. In contrast, monomers according to the present invention are generally soluble in inorganic solvents.

DE—A—2430286 also refers to quaternary ammonium monomers (and polymers therefrom) which contain ethylenic unsaturation together with halohydroxypropyl or glycidyl groups, but such prior art compounds lack surfactant anions. The monomers referred to in OS 2430286 are, as Lewis et al, generally cationic and not compatible with anionic systems and also are generally water soluble salts which are insoluble in many organic solvents and potential comonomers. GB—A—1,143,761 and US—A—3,011,918 disclose quaternary ammonium monomers (and polymers therefrom) which contain polymerisable vinyl benzene moieties and hydroxyalkyl, e.g. hydroxypropyl, moieties; however these monomers lack surfactant anions and halohydroxypropyl or glycidyl moieties. Samour US—A—3,983,166 discloses quaternary ammonium monomers (and polymers therefrom) which contain ethylenic unsaturation and surfactant anions but contain no halohydroxypropyl, glycidyl or like moieties giving polymers therefrom low energy cure properties. Furthermore, Applicant's monomers, in contrast to those of GB—A—1,143,761, US—A—3,011,918 and Samour US—A—3,983,166, give rise to polymers having low energy cure properties, i.e. curability at ambient or somewhat higher temperatures.

According to one aspect of this invention there are provided quaternary ammonium monomers having the formula

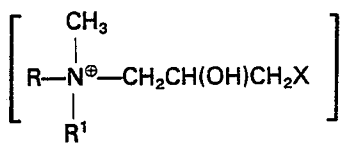 $Y^{\ominus}$ (I)

or

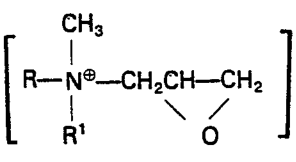 $Y^{\ominus}$ (IV)

wherein

R is an ethylenically unsaturated organic group

$R^1$ is a linear $C_1$ to $C_4$ alkyl group, optionally hydroxy substituted

X is chlorine, bromine or iodine, and

$Y^{\ominus}$ is a surfactant anion.

As the above compounds are salts of quaternary ammonium ions and lipophilic anions, they are quaternary liposalts.

In a first preferred embodiment (a) the ethylenically unsaturated organic group R is:

$$CH_2{=}C(R^4){-}C(O)Z{-}A{-}$$

wherein

$R^4$ is hydrogen or methyl,

Z is oxygen or $-NR^5-$

wherein

$R^5$ is hydrogen or hydrocarbyl having up to about 10 carbons, preferably hydrogen or methyl, and

A is a ($C_2$—$C_4$) alkylene group having at least two carbon atoms in a chain between the adjoined Z and $N^+$ or A may be a polyoxyalkylene group of the formula

$$-(CH_2CH_2O)_xCH_2CH_2-$$

wherein

x is an integer, preferably from 1 to 11,

In a second preferred embodiment (b); R is the structure

$$R^3—CH_2—(CHR^2)_n—CH_2— \quad (II)$$

wherein

n is 0 or 1

$R^2$ is H or OH, and

$R^3$ is an alkenoxy group containing an allyl group or a carbalkenoxy group containing a double bond functionally equivalent to an isolated vinyl group.

In a third preferred embodiment (c); R is the structure

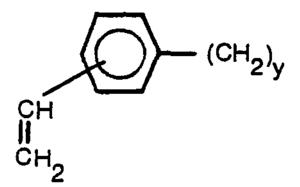

(III)

wherein

y is an integer from 1 to 4. Throughout this disclosure this structure III will also be referred to as an "arvinylphenylenylalkylenyl" group.

A detailed description of the cation porrtion of those monomers of the first embodiment (a) wherein Z is oxygen is given in US—A—3,678,098 and US—A—3,702,799. In the present invention $Y^{\ominus}$ is a surfactant anion. In the resulting monomer the ethylenically unsaturated group is linked to the rest of the molecule by means of an ester linkage and A is preferably an ethylene group. When Z is —$NR^5$— the linkage is by means of an amide group and A is preferably an ethylene or a propylene group. In this first embodiment, (a), preferred R groups are α, β, ethylenically unsaturated monovalent groups such as substituted $C_1$—$C_4$ alkyl acrylates or methacrylates and the corresponding substituted N-alkyl acrylamide and methylacrylamides. The monomers of preferred embodiment (a) can be homopolymerized, copolymerized with each other and copolymerized with other ethylenically unsaturated monomers as taught in US—A—3,678,098 column 2, line 75 through column 3, line 66.

The second preferred embodiment (b) includes monomers having a surfactant anion and a quaternary ammonium cation described in EP—A—82304032.4. Preferred embodiment (c) includes quaternary ammonium monomers having a surfactant anion and a quaternary ammonium cation described in EP—A—82304031.6. For each of the monomers (I), it is preferred to copolymerize them with monomers having similar relative reactivity ratios as taught by C. Walling in Free Radicals in Solution, John Wiley, 1957, Chapter 4 and Bandrup and Immerget et al, Polymer Handbook, John Wiley, 1975, Section II, n.b . pages 249—257.

Among useful comonomers are: acrylate esters, preferably of $C_1$—$C_8$ alcohols, methacrylate esters, preferably of $C_1$—$C_8$ alcohols, acrylic acid, methacrylic acid, itaconic acid, styrene, alkyl styrenes, vinyl esters, preferably of $C_1$—$C_{12}$ acids especially vinyl acetate, acrylamide, methacrylamide, acrylonitrile, maleic anhydride, vinylidene chloride, N-vinylpyrrolidone, maleate esters, preferably of $C_1$—$C_8$ alcohols, fumarate esters, preferably of $C_1$—$C_8$ alcohols, propylene, ethylene and other olefins, vinyl chloride and vinyl toluene.

In a preferred process of the present invention, a hydrogen acid salt of the tertiary amine, $RN(R^1)CH_3$ is reacted under suitable conditions with an epihalohydrin, i.e.,

$$X—CH_2—\underbrace{CH—CH_2—O}, $$

in which X is chlorine, bromine, iodine or a group functionally equivalent to a halide, to form a halohydroxypropyl dialkyl quaternary ammonium compound. Exchange of the acid salt anion for a surfactant anion then yields the compound of Formula (I). Preferably, the hydrogen acid employed to form the salt of the tertiary amine is a simple inorganic acid such as a halogen acid, a phosphoric acid, a sulfuric acid, including the acids of low molecular weight inorganic sulfates, such as methyl sulfate, carboxylic acids and so forth, with the acids having a ionization constant, $pKa^a$, of 5.0 or less; most preferred are hydrochloric and, especially so nitric acids. An alternative process uses a hydrogen acid of a surfactant anion to form the salt of the tertiary amine. The tertiary amine surfactant salt is then reacted under suitable conditions with an epihalohydrin to form the compound of formula (I). The latter alternative can be carried out in an organic solvent or a mixed water-solvent system, particularly employing a monomer as the solvent which monomer is to be a comonomer for a subsequent copolymerization with the formula (I) compound.

In brief summary, the process above described for producing the monomer may be regarded as the

conversion of a tertiary amine to a hydrogen acid salt followed by reaction of the hydrogen acid salt at a pH between about 6 and about 8 with an epihalohydrin, followed by anion exchange as described hereinbelow and further acidification and dilution to the level of concentration desired for ultimate use of the monomer solution. It should be noted that once the hydrogen acid salt of the tertiary amine is formed, the reaction with the epihalohydrin can be conducted by any of the methods described in the aforementioned US—A—3,678,098, particularly the examples and the section beginning at line 68 of column 1 and concluding at line 17 of column 2.

In a further embodiment the halo hydroxy propyl dialkyl quaternary ammonium compound of formula (I) is converted to the corresponding epoxide of formula (IV), by raising the pH by introducing an alkaline material. By the introduction of an equivalent or more of alkaline material the monomer of formula (I) may be completely converted to that of formula (IV) although it may sometimes be desirable to have the mixture of monomers obtained by the incomplete conversion. The alkaline materials are inorganic alkalie such as the alkaline and alkaline earth caustics, sodium hydroxide, potassium hydroxide, calcium hydroxide, the corresponding carbonates and other alkaline salts of the alkaline earth metals. It is preferred that all of the reaction steps be up to the exchange of the small ion for the surfactant anion be carried out in an aqueous medium, usually comprising a water-miscible organic solvent, because the rates of reaction may be most favorable in such medium. Monomers of formula (IV) are particularly useful in both emulsion and solution polymerization processes to make both copolymers and homopolymers. The comomoners employed are those which are not reactive with the epoxide group, so the products are vinyl addition copolymers. In the solution polymerizations solvents are chosen which are not reactive with the epoxide group; aromatic hydrocarbons and mixtures of these with other non-reactive solvents are preferred.

Polymers of the monomers of formula (IV) are normally used without further activation steps. To increase the speed of the crosslinking reaction the copolymers of the monomers of formula (I) are activated by raising the pH to neutral or alkaline conditions, from the acid conditions under which they are normally maintained because of their greater stability with respect to gelation. In general aqueous systems comprising polymers of the monomers of formula (I) are maintained at pH values below 6 and are activated by raising the pH above 6 by the addition of alkali; the more alkali, and the higher the pH resulting, the more rapid is the curing of the polymer. It is thought that the mer units derivable from the monomers of the formula (I) become converted to those of formula (IV) under alkali conditions and that the alkali catalyzed transformations of the glycidyl groups can cause cure and insolubilization of the polymer.

Polymers of the present invention containing mer units corresponding to formula (I) may be raised to a pH above 7, such as to the 9 to 12 region without fear of rapid gelation. The polymer so obtained is stable for a limited amount of time even though such a polymer may not be stored indefinitely without loss of functionality. Polymers of the monomers of formula (I) when activated by a caustic treatment for a period of about 1 to about 5 hours can be reactive and readily crosslinked particularly when used as coatings, binders or adhesives; at high pH values shorter times, such as a few minutes, may be used. Thus by using polymers which represent mixtures of mer units derived from the monomers of formula (I) and those of the formula (IV) and by control of pH a manufacturer may achieve balances of stability, ease of activation and reactivity or curing level not realizable in the prior art.

The glycidyl quaternary ammonium liposalt monomers of formula (IV) can be prepared from the monomers of Formula (I) by either of two methods. In one method the nitrate salt, or other small anion salt, of the halohydrin quaternary is treated with a mild base, such as potassium carbonate, in a water-organic solvent mixture and converted to the epoxide. The epoxide is then converted to a liposalt. In the second procedure the halohydrin quaternary salt of the small anion is first converted to a liposalt in solution in an organic solvent and then a mixture of the liposalt solution and water is treated with a base, such as sodium hydroxide or potassium carbonate, to convert the halohydrin to the epoxide. The epoxide will be dissolved in the organic solvent and this solution may then be washed with water to remove the traces of the small anion salt formed. The glycidyl liposalt monomers of Formula (IV) are readily polymerized in bulk, solution, emulsion or suspension polymerization processes, solution and emulstion being preferred. Care must be taken not to include among the comonomers materials which are well known in the art to be reactive with the epoxide group uneer the conditions chosen for the polymerization.

In both polymers and monomers the glycidyl group and the halohydrin group may be interconverted by treatment with appropriate acidic and alkaline materials. Acids, such as hydrochloric acid, when added to a system comprising the glycidyl group will convert it to the halohydrin. Alkaline materials when added to a system comprising the halohydrin group convert it to the glycidyl group.

The epihalohydrin used for the purpose of this invention may be epiiodohydrin of the epibromohydrin. It is preferable, however, to use the epichlorohydrin. It has been found that there might be a relationship between the reate of reaction (of the epihalohydrin with the amine hydrogen acid salt) and the nature of the $R^1$ substituents on the amino nitrogen. For that reason, it will generally be preferred that $R^1$ is methyl. Nevertheless, strict adherence to the selection of $R^1$ as described above may provide acceptable reaction rates of the amino salts with any of the epihalodrins.

As will be seen from the Examples, the monomers of the present invention are suitably prepared and stored as solutions. This is not a critical limitation, and if desired, they may be concentrated and/or isolated from the reaction medium in which they are dissolved by removal of the solvent, typically by vaporization under vacuum, or by crystallization.

Preferred embodiment (B) of the present invention provides a group of ethylenically unsaturated monomers of.hte quaternary ammonium type which are especially useful in copolymerization with vinyl acetate type monomers to provide copolymers capable of low energy curing. Thus, this embodiment may permit the development of monomers and polymers similar to those disclosed in the above U.S. patents, but with properties to meet specific application requirements particularly when copolymerization with a vinyl ester is desired.

In a preferred embodiment (B) X is as defined previously, n is 0 or 1, $Y^-$ is a surfactant anion, $R^1$ is ($C_1$—$C_4$) straight chain alkyl optionally hydroxysubstituted, $R^2$ is H or OH, and $R^3$ is an alkenoxy group containing an allyl group or a carbalkenoxy group containing a double bond functionally equivalent to an isolated vinyl group. The term isolated is used herein to distinguish the double bond from conjugated or cumulated double bonds. Thus, for example, acrylates and methacrylates contain vinyl groups which are conjugated with the carbonyl group whereas 3-butenoates contain isolated vinyl groups. It is also recognized, however, that it is not essential to have terminal isolated double bonds; accordingly the term "functionally equivalent" is intended to encompass the 2-substituted 5-norbornene compounds. Similarly, it is recognized that the doubly conjugated double bonds also act functionally equivalently to the isolated vinyl groups; a typical structure of this type would consist of a vinylidene group enclosed between two carbonyls. The ultimate requirement is that such groups not interfere with the general characteristics of the quaternary compounds particularly their ability to form addition copolymers and the ability of such copolymers to crosslink for the purposes described subsequently herein. A further preferred embodiment of the invention is one wherein n in the above formula is 1, $R^1$ is methyl, $R^2$ is —OH, $R^3$ is allyloxy, X is chloro and $Y^-$ is a surfactant anion.

Preferred embodiment (C) of the present invention provides a group of phenylene-containing monomers of the quaternary ammonium type which can be usefully employed in the production of polymers having the desirable characteristics associated with phenylene gorups without diminution of the characteristics associated with the low energy curability and quaternary ammonium functionality. In this way, the usefulness of the monomers and polymers disclosed in U.S. Patent Nos. 3,678,098 and 3,702,799 can be broadended to meet specific application requirements and/or to enhance desirable properties.

.In a preferred embodiment (c) X and $R^1$ are as defined previously, y is an integer from 1 to 4, and $Y^-$ is a surfactant anion. For the purposes of describing the above compounds, throughout this disclosure and in the claims the term "*ar*-vinylphenylenylalkylenyl" is intended to encompass all vinylphenylenyl compounds irrespective of the position of the vinyl group on the ring structure, as well as those compounds in which one or two of the four hydrogen atoms attached to the phenylene ring carbons are replaced by members of the group consisting of lower alkyl, iodo, bromo, chloro, lower alkoxy, dihydroxcarbylamino, carbohydrocarbylamino, hydrocarbyloxy and carbonyloxy groups to the extent that such groups do not interfere with the general characteristics of the compounds, particularly the ability to form addition copolymers and the ability of such copolymers to crosslink for the purposes described subsequentially herein.

A further preferred embodiment of the invention is that in which the vinylphenylenylalkenyl group is vinylbenzyl i.e., where y in the above formula is 1, R is methyl, X is chloro and $Y^-$ is a surfactant anion.

The surfactant anion used in the present invention is an anion which is surface active in water, that is, it is an anion which concentrates at the air-water interface and thereby lowers the surface tension of the water. Many such anions, i.e., the anionic portion of an "anionic surface active agent", are known to those skilled in the art. Among the classes of surfactant anions that are useful in this invention are those given in the classification scheme on pages 15 and 16 of Schwartz and Perry, *Surface Active Agents* Interscience Publishers 1949.

As used herein the term "surfactant anion" embraces mixtures of surfactant anions including commercial materials which often are mixtures of species varying in hydrocarbyl chain length. Among the useful surfactant anions are those which are relatively hydrophilic in the hydrophile-lipophile balance classification of surfactants.

Many types of anionic surfactants are known, and are generally classified by the chemical nature of the anion; particularly useful examples are the sulfuric esters or sulfates joined directly or through an intermediate linkage to a hydrophobic group, alkane sulfonic acids with the sulfonic or sulfonate linked directly to a hydrophobe or linked through an intermediate linkage such as an ester or an amide or ether linkage, alkyl aromatic sulfonic acids again either directly or indirectly linked, phosphates or phosphonic acids, thiosulfates, sulfonamides, sulfamic acids and so forth. Preferred anions are alkyl sulfates having an alkyl group of 6 to 20 carbon atoms, such as lauryl and myristyl sulfates; aromatic sulfonates of 8 to 24 carbon atoms, such as dodecylbenzenesulfonate; alkyl and alkylaryl oxyethylene sulfates having up to 10 oxyethylene units wherein the alkyl group has at least 8 carbons and may have up to a number corresponding to 20 plus the number of oxyethylene units in the anion; and dialkyl sulfosuccinates having a total of 6 to 30 carbon atoms in the two alkyl groups. The most preferred anions are dodecylbenzenesulfonate, lauryl sulfate, myristyl sulfate, tridecyl sulfate, dioctyl sulfosuccinate, diisobutyl sulfosuccinate and dioctyl phosphate. The various anionic surfactants are usually commercially available as alkali metal salts, ammonium salts or salts of low molecular weight amines.

The lipophilic salts (I) and (IV) are prepared by mixing a water-immiscible organic solvent, water, a quaternary ammonium monomer salt and an anionic surfactant salt. The water immiscible solvent may be

a ketone, alcohol, ester, aromatic hydrocarbon, but preferably is a vinyl monomer, such as an acrylate or methacrylate ester or styrene. For the best yield of liposalt the quaternary ammonium salt and the anionic surfactant salt should be mixed at equal equivalents or appromixately so. After mixing the ingredients, two liquid phases result. The organic phase contains the liposalt (I) or (IV) generally in a yield and purity greater than 80% preferably 90% or even 95%. The aqueous phase contains, as the principal component, the (usually inorganic) water-soluble cation from the anionic surfactant and the (usually inorganic) water-soluble anion from the quaternary ammonium component. These water-soluble ions are not micelle-forming ions nor do they exhibit the marked tendency to concentrate at the surface of water as is characteristic of surfactant anions. When the liposalt is to be used as a comonomer in an emulstion polymerization, the preferred solvent would be one of the other comonomers. Although it is not necessary to separate and remove the aqueous layer containing the inorganic salts, its separation may be preferred in order to prepare an emulsion copolymer free of extraneous salts. Such salts frequently are detrimental to the properties of the ultimate polymer film because of increased water sensitivity. As used herein "lipophilic salt (I) or (IV)" and "quaternary liposalt" are synonymous. The term "liphophilic" being that used in the field of colloid science to denote "oil-loving" or oil soluble materials.

The following comments are theoretical only and may be useful in understanding the utility of the monomers of the instant invention, particularly as regards their incorporation into polymers in emulsion copolymerization. They do not however limit the scope of this invention in any way..The monomers are oil soluble and comparatively insoluble in water so despite their anionic surfactant content these monomers do not behave as surface active agents. This is believed to be due to the shielding of the charged regions of the salt by the surrounding organic groups, that is the four organic groups surrounding the nitrogen atom and the large hydrocarbon attached to the charged region of the anion. Thus the monomers tend to distribute into the organic phases present in an emulsion polymerization, i.e., into the monomer particles in the monomer emulsion and the polymer latex particles in the polymer emulsion and in both of these during the polymerization. Compared to any of the surface active agents normally employed in emulsion polymerization these monomers do not concentrate effectively at the interface between the aqueous phase and the growing polymer particle. The presence of these monomers in the growing latex polymer particle is believed to have the very important result that the crosslinking quaternary monomer becomes incorporated uniformly into the polymer; as opposed to being substantially on the polymer particle surface. The quaternary monomer, being a relatively expensive monomer, its more effective use, due to uniform incorporation, particularly its not being essentially lost as watersoluble polymer, leads to both better crosslinking and lower cost.

The liposalt monomers of the present invention are soluble in organic solvents and water insoluble in general. Thus, the quaternary ammonium liposalt monomers are readily employed in organic solution polymerizations, and are particularly well adapted to polymerization processes in which it is desirable to form a mutual solution of some or all of the monomers before polymerization. This solubility property is particularly advantageous in bulk polymerizations, where it is desirable to form a solution of the monomers, as well as in suspension polymerization. In the case of emulsion polymerizations, the quaternary ammonium monomers of the prior art tend to segregate during polymerizatioon so as to give quaternary ammonium-rich polymer fractions with higher water solubility than the remainder of the polymer. These water rich fractions contribute to water sensitivity of the final products, such as coatings, binders or adhesives made from the polymer emulsion. It is particularly noteworthy that the low energy cure characteristic of the functional quaternary ammonium mer units of the polymer made from monomer of the present invention is retained.

The quaternary ammonium monomers of the present invention are polymerizable, and for this purpose, their solutions may be used directly. Any known polymerization initiator of the free radical type can be used. Examples are t-butyl hydroperoxide, ammonium persulfate, and alkali metal persulfates, such as those of sodium or potassium. They are used at the customary dosages such as 0.1 to 2% by weight based on monomer weight. They may be used with sodium hydrosulfite or other reducing agents in redox systems. Alternatively, the polymerization may be effected by actinic radiation.

Emulsion polymerization procedures are particularly effective for polymerization of the low energy cure quaternary ammonium monomers of the present invention. As emulsifiers in the emulsion polymerization any of the commonly used nonionic surfactants may be employed, such as the alkyl phenyl poly ethoxy ethanols having from about 10 to 50 or more oxyethylene units, and any of the anionic surfactants, preferably the species listed above. The use of the comparatively inexpensive anionic surfactants as emulsifiers with the quaternary ammonium liposalt monomers of this instant invention further distinguishes these monomers from the quaternary monomer of the prior art. The prior art monomers, not being liposalts, were generally employed with nonionic surfactants or cationic surfactants. The anionic surfactant stabilized emulsion polymers of this invention can of course be mixed with known commercial anionically stabilized emulsion polymers to achieve specific properties and various synergistic effects.

One or more ethylenically unsaturated monomers having a group

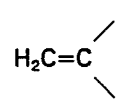

may be polymerized with the quaternary monomers of the present invention, under conditions such that the polymerization medium is maintained moderately acidic, preferably in the pH range 4 to 7. Thus by this method, it is possible to produce homopolymers and/or copolymers of the present quaternary monomers with the quaternary monomers of the aforementioned U.S. Patent 3,702,799 beginning in Column 4 at line 51 and continuing through line 22 of Column 5.

In identifying suitable vinyl systems for reaction with the quaternary ammonium liposalt monomers care should be paid to the reactivity ratios of the monomers and/or to the Q and e values as determined in accordance with the Alfrey-Price Qe scheme as explained in *Free Radicals In Solution* and the *Polymer Handbook* as given above. Utilizing this type of information a proper choice of embodiment of this invention can be made from its expected relative reactivity ratios $r^1$ and $r^2$ and that of the vinyl monomers. It is preferred that the relative reactivity ratios of the liposalt monomer and the comonomers should differ by no more than a factor of 10 and neither should be 0. Clearly the Q and e values of the quaternary ammonium liposalt monomer should be similar to those of the vinyl monomers used to form a copolymer.

The quaternary ammonium liposalt monomers of the present invention can be homopolymerized but advantages in their use are obtained in coplymerization which employs the excellent organic phase solubility characteristic of these monomers.

Among the preferred monomers used with the quaternary ammonium liposalt monomers are acid and acid anhydride monomers. Ordinarily the use of acid monomers (anionic) in copolymerization with quaternary ammonium monomers (cationic) is avoided however in the present invention these are among the preferred polymer compositions. Preferably the amount of acid comonomer employed is less than or about equal to the amount of quaternary ammonium monomer, on a molar basis, but in some instances a molar excess of acid is desired. The acids may be any of the α, β-unsaturated acids, such as the monocarboxylic acids, preferably acrylic, methacrylic, crotonic and half esters of maleic and fumaric, with acrylic and methacrylic being most preferred; as well as polycarboxylic acids such as maleic, fumaric and, preferably, itaconic. The quaternary ammonium liposalt monomer content is, by weight, usefully up to 100% with the ranges 90 to 100% and 0.2 to 50% being preferred 0.5 to 10% more preferred and 1 to 5% most preferred. The carboxylic acid monomer content is by weight, preferably up to 5%, more preferably 0.1 to 1%.

A surprising feature of the copolymers made from the monomers of this invention is that many can exhibit little, if any, cationic character. Therefore, despite the polymers having cationic mer units, they may be compounded with commonly used anionic materials (such as pigments, thickeners, dyes, fillers, etc.) without coagulation, excess thickening, grease formation or other signs of unacceptable stability on storage. In certain applications however it may be desirable that the polymers exhibit cationic character. This may be achieved by employing quaternary ammonium monomers which are not liposalt monomers, in addition to the liposalt monomers of formula I, in the preparation of the polymer. In general it is perfectly feasible to employ the formula I monomers in conjunction with other quaternary ammonium monomers, including: those which have the same cation as the monomers of this invention but do not have a surfactant anion; those which have a surfactant anion and a quaternary ammonium cation not as used in this invention; and those quaternary ammonium monomers different both in respect to anion and cation from those used in the present invention. Of course these various other quarternary ammonium salts do not contribute to the advantages of the present liposalt monomers, particularly the low energy cure characteristics and solubility in organic solvents and monomers.

Examples of quaternary ammonium monomers which may be employed among the comonomers in preparing the polymers of this invention are those of Silvernail et al taught in US—A—3,011,918 column 2, lines 17 to 37 as "... vinyl-benzyl quaternary ammonium compounds having the general formula

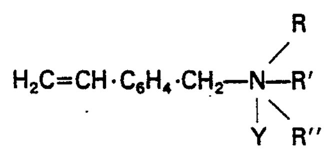

wherein R, R′ and R″ each represent individually a monovalent radical being one of the following: $CH_2OHCH_2$— $CH_3CHOHCH_2$, $CH_2OHCHOHCH_2$— and alkyl, aryl cycloalkyl and aralkyl hydrocarbon radicals, and R, R′ and R″ collectively represent the trivalent radical of the formula:

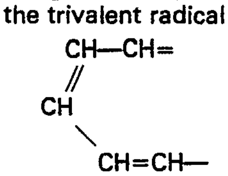

wherein the three valences are attached to the nitrogen atom, the said R group containing a total of not more than 12 carbon atoms in the sum of the constituent radicals, .....''; those of Fordyce et al, taught in US—A—3,023,162, as the mer unit present in the polymer, column 2, lines 10 to 31 as "..... quaternary unit having the structure of the formula:

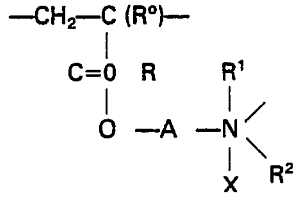

(II)

where

$R^o$ is H or, preferably, $CH_3$.

A is one of the following: $-(CH_2)_2-$. $-(CH_2)_3-$, and $-CH_2CH(CH_3)-$,

$R^1$ is methyl or ethyl

$R^2$ is methyl or ethyl,

R is one of the following: β-hydroxyethyl, β-hydroxypropyl, and α-hydroxypropyl, and

X is hydroxyl or a negative, salt forming radical or atom.

Examples of these negative radicals include halides, such as chloride, bromide, and iodide, sulfate, e.g., the methyl sulfate anion, acetate, tartrate, propionate, citrate, phosphate, and so on."; and those of Samour et al in US—A—3,861,948, column 1, line 65 to column 2, line 23 having the formula

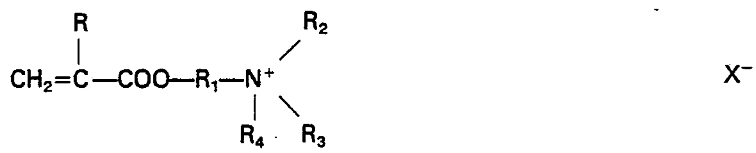

in which R represents hydrogen or methyl; $R_1$ represents an alkylene group having 2 to 12 carbon atoms including ethylene, propylene, butylene, hexylene and decylene or $R_1$ represents a 2-hydroxypropylene group; $R_2$ and $R_3$ each independently represents an alkyl group having from 1 to 4 carbon atoms; $R_4$ represents (a) an alkyl group having from 1 to 6 carbon atoms, or (b) a group having the formula

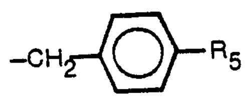

in which $R_5$ represents hydrogen or an alkyl group having from 1 to 6 carbon atoms, or (c) a group having the formula $-CH_2-Y$ in which Y represents $-CONH_2$, $-COOH$, or $-COOR_6$ in which $R_6$ represents an alkyl group having from 1 to 6 carbon atoms; and in which X represents Cl Br, or $-SO_4R_7$, where $R_7$ represents methyl, ethyl or tolyl. Many other quaternary compounds will be recognised by the skilled man to be useful.

Polymers of the compounds according to this invention offer wide utility because of their ability to further polymerize and to crosslink via self-reaction and also because of their ability to react with a wide variety of other materials. Activated epoxide groups are well known to those skilled in the art to be reactive with many coreactants, particularly with those with replaceable hydrogen, such as alcohols, acids, primary and secondary amines, phenols, etc. The polymers are particularly appropriate when used, alone or formulated, in industrial applications such as in binders, coatings and adhesives.

The polymers are particularly useful in clear or pigmented coatings for use on soft substrates, such as vinyls, leather and paper, as well as on hard substrates such as wood, metal, mineral and road surfaces. The coating, in these uses, serves the various well known decorative and protective purposes, such as wear resistance, solvent resistance, detergent resistance, abrasion resistance, appearance improvement, etc. As pigment print binders, the polymers are useful in printing inks which furnish durable design or decoration for woven or non-woven fabrics, films, rigid panels, etc. Fibers of either synthetic or natural materials, such as polyolefins, polyesters, rayon, nylon, fiberglass, wood, wool, etc., may be bonded by means of these polymers to furnish non-woven fabrics, particularly those of high durability for uses such as clothing interliners, fiberfill insulation, filter material, diaper components, and various forms of wearable and decorative fabrics. Used alone or in formulations, these polymers offer strong and durable adhesives particularly useful for the lamination of fabrics, woven or non-woven, films, hard panels, foamed materials, and the like, in any combination to form two-layer or multi-layer laminates. Employed as a flock adhesive, or a component thereof, the polymer serves to adhere fiber flocks of materials such as nylon, polyester or rayon to a substrate, such as fabrics, either woven or non-woven, rigid panels and foams. Towels, wipes and other paper products with good mechanical strength and water resistance are made by binding wood fibers, or mixtures of these with other fibers, employing the present polymers as binders. Another used of these polymers is in the tanning of leather. Polymer latices are particularly useful in all of these applications, although polymers prepared in other ways may be suitable alternatives, such as solution

polymers for use as topcoats or adhesives.

Examples of the invention will now be described to enable the invention to be more fully understood, parts and percentages being by weight and the temperature in degrees celcius unless otherwise.

The following abbreviations are used:

CH—DMA — The quaternary ammonium ion obtained by the addition of epichlorohydrin to dimethylaminoethyl methacrylate

DDBS — Dodecylbenzenesulfonate

DiB — Diisobutyl sulfosuccinate

AA — Acrylic acid

EA — Ethyl acrylate

IA — Itaconic acid

AN — Acrylonitrile

BA — Butyl acrylate

MMA — Methyl methacrylate

AM — Acrylamide

MA — Methyl acrylate

Example 1

Preparation of a Liposalt

In a vessel, thoroughly mix 80 g ethyl acrylate, 133.6 g of 30.4 % aqueous CH—DMA nitrate (40.6 g), 45.24 g sodium dodecylbenzenesulfonate (DDBS) and 2 g 1.6 N nitric acid. The two liquid layers are allowed to separate. The upper (organic) layer, 169.4 g, contains 71.7 g of solids having 0.687 meq/g hydrolyzable chloride. The lower (aqueous) layer, 87.7 g, contain 13.4 g of solids having 0.207 meq/g hydrolyzable chloride. Of the 32.5 g of the CH—DMA cation charged, 29.2 g (90%) is found in the organic layer and 4.0 (12%) in the aqueous layer. Of the theoretical amount of liposalt (74.75 g) 67.1 g (90%) can be accounted for in the organic phase.

In the same way liposalts of CH—DMA are prepared using as the anionic surfactant $CH_3(CH_2)_{11}(OCH_2CH_2)_4SO_4Na$, $C_8H_{17}$—$C_6H_4$—$(OCH_2CH_2)_4SO_4Na$, the sodium diisobutyl, dihexyl, dicyclohexyl and dioctyl sulfosuccinates, sodium 2-ethylhexylsulfate and sodium lauryl sulfate. Also in the same way with sodium DDBS, liposalts of the epichlorohydrin adduct of dimethylaminopropyl methacrylamide, *ar*-vinylbenzyl dimethyl amine and 1-allyloxy-3-dimethylamino—2—hydroxypropane are prepared. All are then incorporated into copolymers by the procedure of Example 2.

Example 2

Preparation of Copolymer

Emulsion:

A monomer emulsion is prepared having 279 g $H_2O$, 64.8 g octylphenylpoly(39)oxyethylene ethanol, 2.38 g AA, 1154.5 g EA and 65.4 g of CH—DMA dodecylbenzenesulfonate. A 3-litre, 4-necked flask is equipped with a stirrer, thermometer condenser, 50 ml buret and monomer feed means. A continuous addition redox polymerization is carried out under nitrogen, in the presence of an additional 372 grams of water initially charged to the flask, at about 60°C over a period of about three hours. At the end of the polymerization a free radical chaser is employed to decrease the level of unreacted monomers; the flask contents are cooled and 3.5 g sodium acetate dissolved in 12 g water are added. The final polymer emulsion has a pH of 4.6, a viscosity of 0.19 $NS/m^2$ (190 cps) and a solids content of 58.5%.

In the same way emulsion polymers are prepared using CH—DMA liposalts containing as the anion diisobutylsulfosuccinate, dihexylsulfosuccinate, dicylcohexylsulfosuccinate, dioctylsulfosuccinate, 2-ethylhexylsulfate, lauryl sulfate, Polystep® B—10 and Polystep® B—27 (Stepan Chemical Co.).

Example 3

Copolymerization Efficiency of Quaternary Liposalts

Emulsion copolymers at 56% solids having the composition 96.65 EA/3 CH—DMA liposalt (calculated

as nitrate)/0.35 MAA are prepared from three of the liposalts of Example 1. Each emulsion, 40 g, is diluted with 120 g of water and 23 g of each diluted emulsion (14% solids) is centrifuged to separate the polymer solids from the serum. The serum phase is analyzed for solids and total chloride; the total chloride content of the centrifuged sample is 0.299 meq. A control sample is made utilizing CH—DMA nitrate in place of the liposalts; the total chloride content of this centrifuged sample is 0.386 meq. Results are summarized as follows:

| Anion | Serum Weight, g | Total Chloride of Serum, meq | Solids of Serum, % | Fraction of Quaternary Liposalt (1) in Serum |
|---|---|---|---|---|
| 2-Ethylhexyl-sulfate | 18.7 | 0.021 | 0.78 | 0.07 |
| Lauryl sulfate | 18.2 | 0.013 | 0.57 | 0.04 |
| Dodecylbenzene-sulfonate | 18.2 | 0.009 | 0.47 | 0.03 |
| Nitrate (comparative) | 18.3 | 0.286 | 0.90 | 0.74 |

The results demonstrate that more than 90% of the quaternary liposalt is found in the solid polymer phase of the emulsion whereas only 25% of the quaternary salt is in the solid polymer phase when the counterion of the quaternary is nitrate.

In a similar way emulsions with composition 98.9EA/0.1AA/1.0 CH—DMA liposalt (calculated as nitrate) are analyzed for the fraction of quaternary liposalt in the serum phase with the following result.

| Lipophilic Anion | Fraction of Quaternary in Serum |
|---|---|
| Polystep® B—10, Stepan Chem. Co. $nC_{12}H_{25}(Oc_2H_4)_4SO_4Na$ | 0.07 |
| Diisobutylsulfosuccinate | 0.09 |
| Dodecylbenzenesulfonate | 0.08 |

## Example 4

Crosslinking of Quaternary Liposalt Copolymer

The crosslinking, as measured by volume swelling ratios and solvent soluble fraction, of cured emulsion polymers prepared with CH—DMA nitrate are compared to those containing CH—DMA liposalts. Emulsions, 100 g at 50% solids, are treated with 10% sodium hydroxide (0.5—1.0 g), except for Example 4A which is treated with four parts of 15% sodium sesquicarbonate; all represent an excess of base over the stoichiometric requirement for activation. About 0.8 g of the treated emulsion is applied to a spot plate cavity and allowed to air dry and cure for one week at room temperature. The cured pellets as made are allowed to swell for four days in 25—40 g of portions dimethylformamide (DMF) and chlorobenzene ($C_6H_5Cl$) to determine the volume swelling ratio and the solent soluble fraction. Results are summarized in the following table.

Both the lower volume swelling ratio and lower solvent solubles shown in the copolymer for 4B and 4C demonstrate the superior crosslinking achieved by quaternary liposalts even when they are present in the copolymer composition at a lower concentration.

Cure of Copolymers Containing Liposalts

| Example | Copolymer Composition[a] | Base[b] | Volume Swelling Ratio DMF | Volume Swelling Ratio $C_6H_5Cl$ | Solvent Solubles % DMF | Solvent Solubles % $C_6H_5Cl$ |
|---|---|---|---|---|---|---|
| 4A | EA/CH—DMA Nitrate 96.3/3.7 | | 37.8 | 33.4 | 49 | 42 |
| 4B | EA/CH—DMA DDBS/AA—98/1.8/0.2 | 1.0 | 9.6 | 9.1 | 14 | 7 |
| 4C | EA/CH—DMA DDBS/IA—98/1.8/0.2 | 0.39 | 11.8 | 12.1 | 22 | 16 |
| 4D | EA/CH—DMA Nitrate/IA—98/1.8/0.2 | 0.39 | 15.4 | 24.9 | 33 | 27 |

a) DDBS = dodecylbenzenesulfonate — The amount of quaternary salt in the copolymer is calculated on the basis of nitrate as the counterion.
b) $N_aOH$ g/100 g copolymer added for activation of the copolymer.

Example 5

Preparation of Copolymer Emulsion-Liposalt Formed "in situ"

A monomer emulsion is prepared from 327 g $H_2O$, 139.5 g octylphenylpoly(39)oxyethyleneethanol, 12.8 g itaconic acid, 2412 g EA, 233.3 g CH—DMA nitrate 33% aqueous, and 307 g sodium DDBS 28% aqueous. A 5-litre 4-necked flask is equipped as in Example 2 using t-butylhydroperoxide and sodium formaldehyde sulfoxylate as a redox initiator system, a continuous addition polymerization is carried out under nitrogen, in the presence of an additional 620 grams of water charged to the flask initially and 200 grams of water introduced with the redox initiator. Polymerization of 100 g of monomer emulsion is initiated at 50° C, the temperature allowed to rise to 60°C where it is maintained for three hours during the uniform continuous addition of the remaining monomer emulsion and redox initiator. At the end of the polymerization a free radical chaser is employed to decrease the level of unreacted monomers; the flask contents are cooled and 7.6 g of sodium acetate in 36 g of water added. The final emulsion has a solids of 59.5% and a viscosity of 0.24Ns/m$^2$ (240 cps.).

Copolymers of the other quaternary liposalts described in Example 1 are prepared by the same procedure as in Example 3 and crosslinked as in Example 4; all exhibit low swelling in solvents and low fraction soluble, thus are crosslinked.

Example 6

Liposalt-Emulsion Polymer Print Paste Binder

An emulsion copolymer of composition 95EA/5CH—DMA.DDBS is tested as a binder by formulation into a print paste. The print paste is made from a 40% solids copolymer emulsion activated by adding 5%, by weight on emulsion weight, 1N sodium hydroxide and allowing to stand for 1 hour. 22 parts of this activated liposalt is added to a vessel and then, under high speed agitation there is added 150 parts of an 0.8% solution in water of Carbopol®845, polyacrylic acid thickener, neutralized with ammonia to a pH of 8, and 15 parts of a 20% aqueous dispersion of Blackman Uhler phthalocyanine blue. The mixture is agitated until uniform in the open vessel and found to have a viscosity of about 20 Ns/m$^2$ (20,000 centipoise) as measured by a Brookfield viscometer. The paste is applied to 65% polyester/35% cotton (P/C) and 70% polyester/30% rayon (P/R) fabrics along with a control print paste using a standard acrylic binder. After four days cure at room temperature the fabrics are tested for wet crock, dry-cleanability and IIIA wash durability. The results are contained in the following table.

An attempt to formulate a print paste with an emulsion copolymer having the composition 95EA/5 CH—DMA nitrate fails because of flocculation of the paste.

TABLE I

| | Wet Crock | | Dry Cleanability | | IIIA Wash Durability | |
|---|---|---|---|---|---|---|
| Binder | P/R | P/C | P/R | P/C | P/R | P/C |
| 95EA/5CH—DMA—DDBS | 3.0 | 3.3 | 2.5 | 4.0 | 3.75 | 2.0 |
| Commercial | 1.75 | 3.0 | 1.5 | 4.0 | 1.5 | 1.5 |

Rating Scheme:

1. Severe color loss
2. Med.-severe color loss
3. Moderate color loss
4. Slight color loss
5. No color loss

Test Methods:

Wet crock — AATCC (American Association of Textile Chemists and Colorists) method 8—1969
Dry cleanability — Tested in perchloroethylene
IIIA — Wash durability — AATCC method 61—1969

Example 7

Other Liposalt Copolymer Compositions

Emulsion copolymers of the following compositions are prepared, activated by base, air dried and cured. All exhibit the markedly lower volume swelling ratio and solvent solubles compared to inorganic salt controls.

88 EA/10 AN/1.8 CH—DMA DDBS/0.2 AA
86.1 EA/10 AN/3.7 CH—DMA DDBS/0.2 AA

84.2 EA/10 AN/5.6 CH—DMA DDBS/0.2 AA
88.1 EA/10 AN/1.0 CH—DMA, Ep—110†/0.7 CH—DMA nitrate/0.2 AA
94.8 EA/0.9 CH—DMA DDBS/0.5 CH—DMA nitrate/0.2/AA
73.8 EZ/24.6 BA/0.9 CH—DMA DDBS/0.5 CH—DMA nitrate/0.2 AA
87.6 EA/10 AN/2.4 CH—DMA DDBS
45 EA/45 MMA/10.0 CH—DMA lauryl sulfate
45 EA/45 MMA/10.0 CH—DMA DDBS
47.4 EA/47.4 BA/5.0 CH—DMA DDBS/0.2 AA
10/EA/80 MMA/10 CH—DMA DDBS
95 EA/5 CH—DMA DDBS
90.5 EA/4 AM/5.0 CH—DMA DDBS
98.1 EA/0.1 AA/1.8 CH—DMA DDBS*
94.85 EA/0.1 AA/3.25 AM/1.8 CH—DMA DDBS*
98/1 EA/0.1 AA/1.8 CH—DMA DDBS*
94.85 EA/0.1 AA/3.25 AM/1.8 CH—DMA DDBS*
98 BA/0.2 AA/1.8 CH—DMA DDBS*
98.8 EA/0.2 IA/1 CH—DMA* dioctylsulfosuccinate

* These are activated, 20 to 24 hours before testing, using 2 equivalents of 1,6 hexanediamine to equivalent of polymerized quaternary group and acid group taken together.
† Alipol® EP—110 believed to be nonylphenylpoly(8) ethoxyethyl sulfate.

## Example 8

Preparation of Glycidyl Liposalts of Formula (IV)

A flask is charged with 100 g water and 161 g (1.0 mole *p*-vinyl-N,N-dimethylbenzylamine, cooled to 15°C, and 90 g of 67% $HNO_3$ charged gradually to bring the pH to 7.0. Epichlorohydrin, 100 g (1.09 moles), is added over two hours to the reaction mixture at 25° and at a pH of 7 to 7.5. The pH being maintained by periodic additions of sodium carbonate or nitric acid. After 24 hours the reaction mixture is concentrated to dryness to yield 320 g of a syrup containing 3.25 meq/g of combined chloride. This syrup is the quaternary ammonium nitrate.

In a similar way dimethylaminopropylmethacrylamide is treated with nitric acid and epichlorohydrin to form its adduct, another quaternary ammonium nitrate.

To 32 g (0.1 mole) of the benzylammonium quaternary prepared above, dissolved in 300 g of 80 acetone/20 water, is added 25 g of potassium carbonate and the mixture stirred for 24 hours. Twenty grams of a lower aqueous layer is withdrawn, the top layer washed with 15 g $H_2O$ and concentrated to a 34.8% solids solution which is found to contain 0.31 meq/g of chloride ion, 0.015 meq/g of combined chloride and 0.96 meq/g of epoxide (by addition of HCl in ethanol/water and magnesium chloride).

In a similar way the quaternary ammonium halohydrin of dimethylaminopropylmethacrylamide is converted to a glycidyl quaternary ammonium salt.

In the manner of Example 1 the two glycidyl quaternary ammonium salts are converted to DDBS liposalts as solutions in ethyl acrylate. Following the same procedure other monomers, butyl acrylate, styrene, vinyl acetate, vinyl chloride and methylmethacrylate, are substituted for the ethyl acrylate to produce a liposalt in solution in the given monomer.

## Example 9

Preparation of a Solution Polymer

A monomer-initiator mixture is prepared from 200 g. of ethyl acrylate, 25 g. of a 20% ethyl acrylate solution of CH—DMA dodecylbenzenesulfonate, 3.0 g. *t*-butylperoctoate and 125 g. toluene. A flask equipped with a thermometer, a Dean-Stark trap, a condenser, a stirrer and an addition funnel is charged with 100 g. toluene and 50 g. of the monomer-initiator mixture. The flask contents are blanketed with nitrogen, heated to reflux (110°C.) and the remainder of the monomer-initiator mixture fed over 2 hours. At the end of the polymerization a change of 1.0 g. *t*-butylperoctoate is made to decrease the level of unreacted monomers. Several grams of water originating from the liposalt solution is collected in the Dean-Stark trap. The polymer solution has a viscosity of 15.7 Ns/m$^2$ (15,700 cps) and a solids of 49.5%.

Using the same process, solution polymers are prepared from the glycidyl quaternary ammonium dodecylbenzenesulfonate of Example 8 derived from p-vinyl-N,N-dimethylbenzylamine by copolymerization of one part with ten parts, by weight, of vinyl acetate. The dimethylaminopropyl methacrylamide based quaternary ammonium liposalt, as prepared in Example 8, is solution copolymerized with styrene and butyl acrylate, ten parts of each of the latter to one of the liposalt to furnish a hydrophobic copolymer with a well incorporated quaternary ammonium salt. The incorporation in such a polymer is one of the unique features of the monomers of this invention, in addition to which the polymer is readily crosslinked.

Example 10

Emulsion Copolymer of Glycidyl Quaternary Ammonium, Liposalt

In the same way as in Example 2 an emulsion polymer with EA is prepared from the glycidyl quaternary ammonium dodecylbenzenesulfonate salts derived from p-vinyl-N,N-dimethylbenzylamine and N,N-dimethylaminopropylmethacrylamide (Example 8). Emulsion polymerization of these glycidyl monomers of Formula (IV) is carried out in the pH range between 2 and 8, preferably between 4 and 7 to produce glycidyl-functional polymers. These polymers are utilized to prepare crosslinked polymers useful as binders, coatings and adhesives, i.e., useful as adherents to substrates.

Example 11

Copolymer Used as a Paper Binder

Employing the process of Example 2, a polymer is prepared having the composition 98.1 EA/1.8 CH—DMA DDBS/0.1AA. A second polymer having the same composition, is prepared by a thermal reflux emulsion polymerization process. Roll towels employing these polymers as binders are prepared and tested as follows:

Procedure:

1. Cut two 0.457m (18") lengths of #4 Whatman Chromatographic paper per sample.
2. Condition at 22.2°C (72°F) and 50% R.H. for 24 hours.
3. Weight conditioned paper to obtain tare weight.
4. Activate polymers one hour prior to use by adding 5% of a 15% sodium sesquicarbonate solution based on total volume of emulsion.
5. Prepare 400 gms (1 pint) of binder at desired solids.
6. Dip the paper in the binder and feed through rollers in Birch padder. Lay damp paper out flat to dry for one hour.
7. Condition saturated samples at 22.2°C (72°F) and 50% R.H. for at least 8 hours.
8. Cure all sheets at 115.6°C (240°F) for one minute.
9. Condition sheets at 22.2°C (72°F) and 50% R.H. for 24 hours to allow for moisture pick-up.
10. Cut each sheet to sixteen 0.025m × 0.152m (1" × 6") strips, eight for dry tensiles and eight for wet tensiles.
11. For both dry and wet tensiles use Model 1130 Instron tensile test machine. Set up Instron as follows:

    Gap between jaw: 0.102m (4 inches)
    Cross head speed: 0.051m (2 inches) per minute
    Calibration: 22.68kg (50 lbs) full scale load for dry tensile.
    22.68 kg (50 lbs) full scale load for wet tensile.

12. Elongate all samples to break. Immerse the wet tensile strips in 1% Aerosol OT solution for about 15 seconds.
13. Read and record maximum stress of each sample to the nearest 0.045 kg (0.1 pound). Report the average of the eight replicates as the wet and dry tensile strength in kilograms per metre (pounds per inch) of width.

The paper utilizing the redox prepared polymer has average tensile strengths of 51.79 kg/m (2.9 lbs./inch) wet and 175.01 kg/m (9.8 lbs./inch) dry. The corresponding values for the paper made with the thermal reflux polymer are 42.86 and 175.01 kg/m (2.4 and 9.8 lbs./inch).

Example 12

Aqueous Topcoat For Leather

A copolymer having the composition 47EA/47.5MMA/5CH—DMA DDBS/0.5AA, prepared by the process of Example 2 at 41% total solids, is activated by adding 17 ml. of 0.5N NaOH to 100 g. of the latex, allowing to stand one hour and then adjusting the pH to 9.5 with the NaOH solution. A 10% copolymer solids formulation is prepared as follows:

| | |
|---|---|
| Water | 57.4 g. |
| Zonyl® FSA (DuPont) | 1.0 |
| Polymer latex (35.1% solids) | 28.6 |
| Thickener | 3.0 |
| Coalescent | 10.0 |

The leather substrate used is Armira factory base coated and plated smooth corrected grain block military leather having a block pigmented acrylic basecoat.

The topcoat is spray-applied and tested in comparison with two commercial materials: 1) a plasticized nitrocellulose lacquer (N/C lac.), 2) a plasticized nitrocellulose lacquer aqueous emulsion (N/C emuls.). The results are in the following table.

| Property | N/C Lac. | N/C emuls. | CH—DMA Copolymer |
|---|---|---|---|
| Sprayability | good | good | good |
| Add-on (gm./ft.$^2$ dry) | 0.30 | 0.36 | 0.30 |
| Appearance | good | good | good |
| Gloss | good | good | sl. dull |
| Tape adhesion | good | good | good |
| Block resistance | good | good | good |
| Wet crock, 1.81 kg — 45.36 kg (4lbs—100lbs). | no damage | no damage | no damage |

Example 13

Durable Non-woven Polyester Fabric

Copolymer latices, having the compositions given in the table below, are prepared by the method of Example 2. The latices are formulated with 0.05% antifoamer, 0.4% wetting agent, 0.8% penetrant, 0.8% stabilizer and 1.25% sodium sesquicarbonate ($NaHCO_3.Na_2CO_3.2H_2O$) activator. Final bath solids is 21.5%. The formulation is applied to the web which is dried at 65.6°C (150°F)/8 min. and cured at 115.6°C (240°F)/2 min. The sheets are tested for (1) IPA wet CD tensile, (2) condition after 5 dry-cleanings and (3) condition after 10 washes/dryings.

IPA wet CD (cross-direction) tensile is measured by cutting strips (0.025m × 0.102m (1 × 4 in) (long dimension in cross-machine direction), soaking the strips 30 min. in isopropanol, and pulling them apart on an Instron Model TMM at 0.005 m/s (12 in./min) using a 0.051m (2 in) gap. Maximum tensile at the break is recorded.

Dry-clean and wash durability are determined by cutting 0.127m (5 in) squares of treated web and sewing them onto 0.254 × 0.254 (10 × 10 in) pieces of cotton print cloth, then running them through five dry-clean or 10 wash and dry cycles. Dry-cleaning is done in the Speed Queen® commercial dry-cleaner which uses Dowper® CS (perchloroethylene charged with a little dry-cleaning soap). Washing is done in the Maytag Washer using a "full" setting, water at 54.4°C (130°F), 175 ml of Orvus® and eight terry-cloth towels. Samples are dried in the dryer after each wash. Results are in the following table, Examples 13A, 13B and 13C.

Example 14

Non-woven Rayon Fabric

Non-woven rayon webs, lightly prebonded with polyvinyl alcohol, are bonded by saturation with a formulated latex of a polymer prepared by the method of Example 2. The web weighs 0.017 kg/m$^2$ (0.5 ox./yd.$^2$) and the polymer pickup is 43%. The latexes are formulated with 1% Aerosol® OT, activated with two equivalents of NaOH per quaternary group and allowed to stand two hours prior to padding. Results are in the table below; Examples 14A, 14B and 14C.

Carded Webs: Dacron Polyester Type 371, Merge (13F1), 1.5 den., 1.5 in Staple
Unbonded Web Weights 0.029 kg/m$^2$ (24.3 g/sq. yd).
Dry Add-on 8.0% dry binder/wet$_2$weight
Final Sheet Weight: 0.052 kg/m$^2$ (43.7 g./sq. yd).

| Example | Binder Description | Sodium Sesqui Carbonate g/100 g binder solids | Web Properties[1] Condition after 5 Dry Cleans | 10 Washes |
|---|---|---|---|---|
| 13A | 96 EA/2 AM/0.2 AA/1.8 CH—DMA DiB[3] | 1.26 | 6.0 | 3.0 |
| 13B | 98 EA/0.2 IA/1.8 CH—DMA DDBS | 1.25 | 6.0 | 4.0 |
| 13C. | 93.2 EA/5 MA/1.8 CH—DMA DDBS | —(2) | 6.0 | 3.0 |

(1) Rating 1-excellent 6-poor
(2) Activated with 0.2% NaOH/100g. binder solids
(3) DiB is diisobutyl sulfosuccinate

| Ex. | Saturant | Dry Tensile MD | CD | Isopropanol Tensile CD | Drape | Dry Hand |
|---|---|---|---|---|---|---|
| 14A | EA/AN/CH—DMA DDBS/AA 88/10/1.8/0.2 | 8.3 | 1.1 | 0.3 | 39 | 2.0 |
| 14B | EA/AN/CH—DMA DDBS/AA 86.1/10/3.7/0.2 | 7.7 | 1.0 | 0.3 | 41 | 3.4 |
| 14C | EA/AN/CH—DMA DDBS/AA 84.2/10/5.6/0.2 | 8.7 | 1.0 | 0.3 | 41 | 1.2 |

Low numbers indicate greater drape and softer hand.

**Claims for the Contracting States: BE CH DE FR GB IT LI NL SE**

1. Compounds of the formula

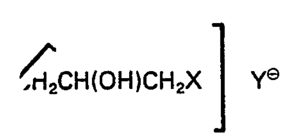

or of the formula

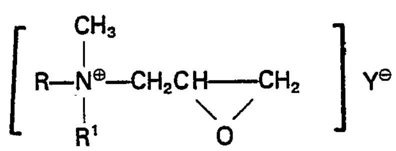

wherein
R is an ethylenically unsaturated organic group,
$R^1$ is a linear $C_1$ to $C_4$ alkyl group, optionally hydroxy-substituted,
X is chlorine, bromine or iodine, and
$Y^{\ominus}$ is a surfactant anion.

2. Compounds as claimed in claim 1 wherein R is:
$H_2C{=}C(R^4){-}C(O)Z{-}A{-}$, and
$R^4$ is hydrogen or methyl,
Z is oxygen or $-NR^5-$
wherein
$R^5$ is hydrogen or hydrocarbyl having up to 10 carbon atoms, preferably hydrogen or methyl, and
A is a $(C_2{-}C_4)$ alkylene group having at least two carbon atoms in a chain between the adjoined Z and $N^{\oplus}$ or A may be a polyoxyalkylene group of the formula

$-(CH_2CH_2O)_xCH_2CH_2-$

wherein

X is an integer from 1 to 11.

3. Compounds as claimed in claim 2 wherein Z is 0 and X is chlorine or bromine.

4. Compounds as claimed in claim 3 wherein $R^1$ is methyl, A is a methylene group, X is chlorine and $Y^\ominus$ is a sulfate or sulfonate or phosphate or sulfosuccinate.

5. Compounds as claimed in claim 2 wherein Z is $-NR^5-$ and X is chlorine or bromine.

6. Compounds as claimed in claim 5 wherein $R^1$ is methyl, A is an ethylene group or a propylene group, X is chlorine, $R^5$ is hydrogen or methyl and $Y^\ominus$ is a sulfate or sulfonate or phosphate or sulfosuccinate.

7. Compounds as claimed in claim 1 wherein R is the structure

$$R^3-CH_2-(CHR^2)_n-CH_2-$$

wherein

n is 0 or 1

$R^2$ is H or OH, and

$R^3$ is an alkenoxy group containing an allyl group or a carbalkenoxy group containing a double bond functionally equivalent to an isolated vinyl group.

8. Compounds as claimed in claim 7 wherein $R^1$ is methyl, $Y^\ominus$ is a sulfate or sulfonate or phosphate or sulfosuccinate and $R^3$ is such that the compound is:

(i) an ether of allyl alcohol or

(ii) an ester of one of the following acids monomethyl ester of maleic acid, vinyl acetic acid, and 5-norbornene-2-carboxylic acid.

9. Compounds as claimed in claim 1 wherein R has the structure

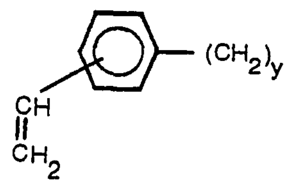

(III)

wherein y is an integer from 1 to 4.

10. Compounds as claimed in claim 9 wherein X is chlorine or bromine, $R^1$ is methyl and $Y^\ominus$ is a sulfate, sulfonate, phosphate or sulfosuccinate.

11. Polymer containing or consisting of units of one or more compounds as claimed in any preceding claim.

12. Polymer according to claim 11 further containing units of one or more other monoethylenically unsaturated monomers.

13. Polymer according to claim 11 or 12 further containing units of one or more other quaternary ammonium monomers.

14. A polymerisable composition which comprises one or more compounds as claimed in any of claims 1 to 10 in a suitable medium optionally together with at least one other monoethylenically unsaturated monomer having a group of the formula

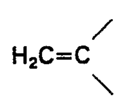

15. An article comprising a substrate coated or impregnated with a polymer according to any one of claims 11 to 13.

16. A method of curing a polymer which comprises adjusting an aqueous system containing polymer according to any one of claims 11 to 13 to a pH of 9 or more and, drying it, or allowing it to dry.

**Claims for the Contracting State: AT**

1. A polymerisation process for making a polymer which comprises polymerising one or more compounds of the formula:

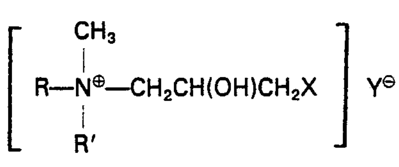

or of the formula

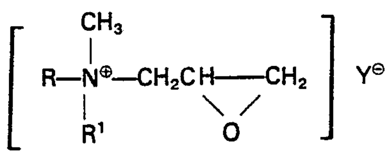

wherein

R is an ethylenically unsaturated organic group,

$R^1$ is a linear $C_1$ to $C_4$ alkyl group, optionally hydroxy-substituted,

X is chlorine, bromine or iodine, and

$Y^{\ominus}$ is a surfactant anion, optionally together with at least one other monoethylenically unsaturated monomer having a group of the formula:

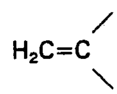

2. A process as claimed in Claim 1 wherein R is $H_2C{=}C(R^4){—}C(O)Z{—}A{—}$ and

$R^4$ is hydrogen or methyl,

Z is oxygen or $—NR^5—$

wherein

$R^5$ is hydrogen or hydrocarbyl having up to 10 carbon atoms, preferably hydrogen or methyl, and

A is a $(C_2—C_4)$ alkylene group having at least two carbon atoms in a chain between the adjoined Z and $N^{\oplus}$ or A may be a polyoxyalkylene group of the formula

$$—(CH_2CH_2O)_xCH_2CH_2—$$

wherein

x is an integer from 1 to 11.

3. A process as claimed in Claim 2 wherein Z is 0 and X is chlorine or bromine.

4. A process as claimed in Claim 3 wherein $R^1$ is methyl, A is an ethylene group, X is chlorine and $Y^{\ominus}$ is a sulfate or sulfonate or phosphate or sulfosuccinate.

5. A process as claimed in Claim 2 wherein Z is $—NR^5—$ and X is chlorine or bromine.

6. A process as claimed in Claim 5 wherein $R^1$ is methyl, A is an ethylene group or a propylene group, X is chlorine, $R^5$ is hydrogen or methyl and $Y^{\ominus}$ is a sulfate or sulfonate or phosphate or sulfosuccinate.

7. A process as claimed in Claim 1 wherein R is the structure

$$R^3—CH_2—(CHR^2)_n—CH_2—$$

wherein

n is 0 or 1

$R^2$ is H or OH, and

$R^3$ is an alkenoxy group containing an allyl group or a carbalkenoxy group containing a double bond functionally equivalent to an isolated vinyl group.

8. A process as claimed in Claim 7 wherein $R^1$ is methyl, $Y^{\ominus}$ is a sulfate or sulfonate or phosphate or sulfosuccinate and $R^3$ is such that the compound is (i) an ether of allyl alcohol or (ii) an ester of one of the following acids: monomethyl ester of maleic acid, vinyl acetic acid and 5-norbornene-2-carboxylic acid.

9. A process as claimed in Claim 1 wherein R has the structure

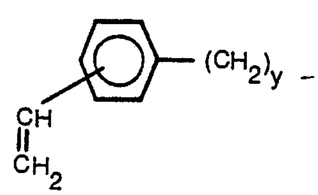

wherein

y is an integer from 1 to 4.

10. A process as claimed in Claim 9 wherein X is chlorine or bromine, $R^1$ is methyl and $Y^{\ominus}$ is a sulfate or sulfonate or phosphate or sulfosuccinate.

11. A polymerisable composition suitable for use in a process as claimed in any preceding claim which comprises one or more compounds as defined in any of claims 1 to 10 in a suitable medium optionally together with at least one other monoethylenically unsaturated monomer having a group of the formula

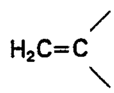

12. A process for the preparation of a compound of the formula

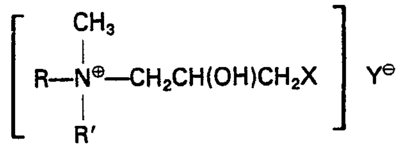

or of the formula

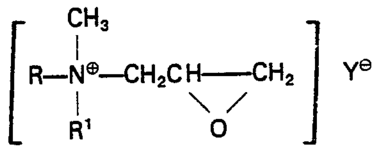

wherein
R is an ethylenically unsaturated organic group,
$R^1$ is a linear $C_1$ to $C_4$ alkyl group, optionally hydroxy-substituted,
X is chlorine, bromine or iodine, and
$Y^{\ominus}$ is a surfactant anion
wherein a hydrogen acid salt or a surfactant salt of a compound of the formula

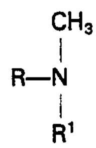

is reacted with an epihalohydrin or a functional equivalent thereof to yield a halohydroxypropyl dialkyl quaternary ammonium compound and, if necessary, acid salt anions therein are replaced with surfactant anions.

13. A method of curing a polymer which comprises adjusting the pH of an aqueous system containing polymer produced by a process as claimed in any of claims 1 to 10 to a pH of 9 or more and drying it or allowing it to dry.

14. A method of coating or bonding or impregnating a substrate wherein the substrate is coated or bonded or impregnated with a polymer produced by the process as claimed in any of claims 1 to 10 and optionally treating the polymer with sodium sesquicarbonate or a chemical equivalent thereof.

**Revendications pour les états contractants: BE CH DE FR GB IT LI NL SE**

1. Composés de formule

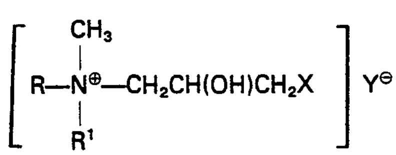

ou de formule

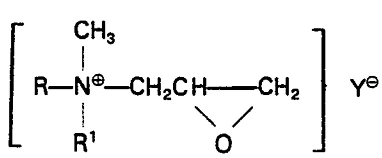

dans lesquelles
R est un groupe organique à insaturation éthylénique,
$R^1$ est un groupe alcoyle linéaire en $C_1$ à $C_4$ facultativement hydroxy-substitué

X est un chlore, un brome ou un iode, et

$Y^{\ominus}$ est un anion tensio-actif.

2. Composés comme revendiqué dans la revendication 1 où R est:

$H_2C{=}C(R^4){-}C(O)Z{-}A{-}$, et

$R^4$ est un hydrogène ou un méthyle,

Z est un oxygène ou $-NR^5-$

où

$R^5$ est un hydrogène ou un hydrocarbyle ayant jusqu'à 10 atomes de carbone, de préférence un hydrogène ou un méthyle, et

A est un groupe alcoylène ($C_2$—$C_4$) ayant au moins deux atomes de carbone dans une chaîne entre le Z et le $N^{\oplus}$ adjacent ou A peut être un groupe polyoxyalcoylène de formule

$$-(CH_2CH_2O)_xCH_2CH_2-$$

dans laquelle

x est un entier de 1 à 11.

3. Composés comme revendiqué dans la revendication 2 où Z est 0 et X est un chlore ou un brome.

4. Composés comme revendiqué dans la revendication 3 où $R^1$ est un méthyle, A est un groupe méthylène, X est un chlore et $X^{\ominus}$ est un sulfate ou un sulfonate ou un phosphate ou un sulfosuccinate.

5. Composés comme revendiqué dans la revendication 2 où Z est $-NR^5-$ et X est un chlore ou un brome.

6. Composés comme revendiqué dans la revendication 5 où $R^1$ est un méthyle, A est un groupe éthylène ou un groupe propylène, X est un chlore, $R^5$ est un hydrogène ou un méthyle et $Y^{\ominus}$ est un sulfate ou sulfonate ou phosphate ou sulfosuccinate.

7. Composés comme revendiqué dans la revendication 1 où R est la structure

$$R^3-CH_2-(CHR^2)_n-CH_2-$$

dans laquelle

n est 0 ou 1

$R^2$ est H ou OH, et

$R^3$ est un groupe alcénoxy contenant un groupe allyle ou un groupe carbalcénoxy contenant une double liaison équivalent fonctionnellement à un groupe vinyle isolé.

8. Composés comme revendiqué dans la revendication 7 où $R^1$ est un méthyle, $Y^{\ominus}$ est un sulfate ou sulfonate ou phosphate ou sulfosuccinate et $R^3$ est tel que le composé soit:

(i) un éther d'alcool allylique, ou

(ii) un ester d'un des acides suivants, ester monométhylique de l'acide maléique, acide vinylacétique et acide 5-norbornène-2-carboxylique.

9. Composés comme revendiqué dans la revendication 1 où R a la structure

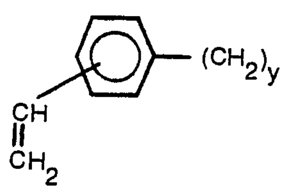

dans laquelle y est un entier de 1 à 4.

10. Composés comme revendiqué dans la revendication 9 où X est un chlore ou un brome, $R^1$ est un méthyle et $Y^{\ominus}$ est un sulfate, sulfonate, phosphate ou sulfosuccinate.

11. Polymère contenant des ou constitué de motifs d'un ou plusieurs composés comme revendiqué dans l'une quelconque des revendications précédentes.

12. Polymère selon la revendication 11 contenant de plus des motifs d'une ou plusieurs autres monomères à insaturation monoéthylénique.

13. Polymère selon la revendication 11 ou 12 contenant de plus des motifs d'un ou plusieurs autres monomères d'ammonium quaternaire.

14. Une composition polymérisable qui comprend un ou plusieurs composés comme revendiqué dans l'une quelconque des revendications 1 à 10 dans un milieu approprié, facultativement avec au moins un autre monomère à insaturation monoéthylénique ayant un groupe de formule

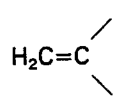

15. Un article comprenant un substrat revêtu ou imprégné d'un polymère selon l'une quelconque des revendications 11 à 13.

16. Un procédé de durcissement d'un polymère qui comprend l'ajustement d'un système aqueux contenant un polymère selon l'une quelconque des revendications 11 à 13 à un pH de 9 ou plus et le fait qu'on le sèche ou qu'on le laisse sécher.

**Revendications pour l'état contractant: AT**

1. Un procédé de polymérisation pour préparer un polymère qui comprend la polymérisation d'un ou plusieurs composés de formule:

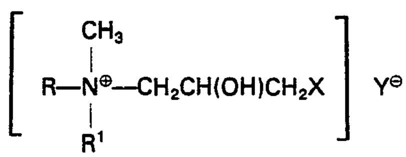

ou de formule

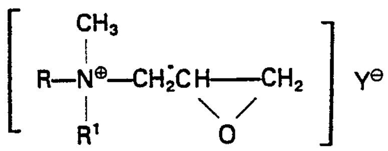

dans lesquelles

R est un groupe organique à insaturation éthylénique,

$R^1$ est un groupe alcoyle linéaire en $C_1$ à $C_4$ facultativement hydroxy-substitué

X est un chlore, un brome ou un iode, et

$Y^{\ominus}$ est un anion tensio-actif, facultativement avec au moins un autre monomère à insaturation monoéthylénique ayant un groupe de formule:

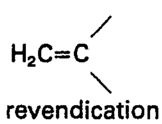

2. Un procédé comme revendiqué dans la revendication 1 dans lequel R est $H_2C{=}C(R^4){-}C(O)Z{-}A{-}$ et

$R^4$ est un hydrogène ou un méthyle,

Z est un oxygène ou $-NR^5-$

où

$R^5$ est un hydrogène ou un hydrocarbyle ayant jusqu'à 10 atomes de carbone, de préférence un hydrogène ou un méthyle, et

A est un groupe alcoylène ($C_2$—$C_4$) ayant au moins deux atomes de carbone dans une chaîne entre le Z et le $N^{\oplus}$ adjacent ou A peut être un groupe polyoxyalcoylène de formule

$$-(CH_2CH_2O)_xCH_2CH_2-$$

dans laquelle

x est un entier de 1 à 11.

3. Un procédé comme revendiqué dans la revendication 2 dans lequel Z est 0 et X est un chlore ou un brome.

4. Un procédé comme revendiqué dans la revendication 3 dans lequel $R^1$ est un méthyle, A est un groupe éthylène, X est un chlore et $Y^{\ominus}$ est un sulfate ou sulfonate ou phosphate ou sulfosuccinate.

5. Un procédé comme revendiqué dans la revendication 2 dans lequel Z est $-NR^5-$ et X est un chlore ou un brome.

6. Un procédé comme revendiqué dans la revendication 5 dans lequel $R^1$ est un méthyle, A est un groupe éthylène ou un groupe propylène, X est un chlore, $R^5$ est un hydrogène ou un méthyle et $Y^{\ominus}$ est un sulfate ou sulfonate ou phosphate ou sulfosuccinate.

7. Un procédé comme revendiqué dans la revendication 1 dans lequel R est la structure

$$R^3-CH_2-(CHR^2)_n-CH_2-$$

dans laquelle

n est 0 ou 1

$R^2$ est H ou OH, et

$R^3$ est un groupe alcénoxy contenant un groupe allyle ou un groupe carbalcénoxy contenant une double liaison équivalent fonctionnellement à un groupe vinyle isolé.

8. Un procédé comme revendiqué dans la revendication 7 dans lequel $R^1$ est un méthyle, $Y^{\ominus}$ est un sulfate ou sulfonate ou phosphate ou sulfosuccinate et $R^3$ est tel que le composé soit

(i) un éther d'alcool allylique, ou

(ii) un ester d'un des acides suivants: ester monométhylique de l'acide maléique, acide vinylacétique et acide 5-norbornène-2-carboxylique.

9. Un procédé comme revendiqué dans la revendication 1 dans lequel R a la structure

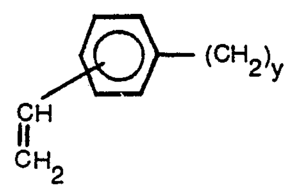

dans laquelle

y est un entier de 1 à 4.

10. Un procédé comme revendiqué dans la revendication 9 dans lequel X est un chlore ou un brome, $R^1$ est un méthyle et $Y^{\ominus}$ est un sulfate ou sulfonate ou phosphate ou sulfosuccinate.

11. Une composition polymérisable appropriée à l'emploi dans un procédé comme revendiqué dans l'une quelconque des revendications précédentes qui comprend un ou plusieurs composés comme défini dans l'une quelconque des revendications 1 à 10 dans un milieu approprié, facultativement avec au moins un autre monomère à insaturation monoéthylénique ayant un groupe de formule

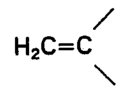

12. Un procédé pour la préparation d'un composé de formule

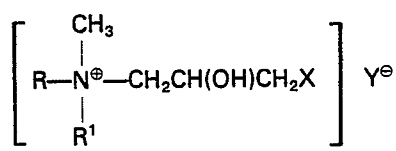

ou de formule

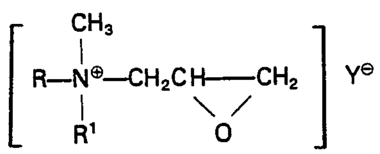

dans laquelle

R est un groupe organique à insaturation éthylénique,

$R^1$ est un groupe alcoyle linéaire en $C_1$ à $C_4$ facultativement hydroxy-substitué

X est un chlore, un brome ou un iode, et

$Y^{\ominus}$ est un anion tensio-actif

dans lequel on fait réagir un sel d'acide hydrogéné ou un sel tensio-actif d'un composé de formule

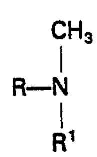

avec une épihalogénohydrine ou un équivalent fonctionnel de celle-ci pour fournir un composé d'halogénohydroxypropyldialcoylammonium quaternaire et au besoin on y remplace les anions de sel d'acide par des anions tensio-actifs.

13. Un procédé de durcissement d'un polymère qui comprend l'ajustement du pH d'un système aqueux contenant un polymère produit selon un procédé comme revendiqué dans l'une quelconque des revendications 1 à 10 à un pH de 9 ou plus et le fait de le sécher ou de le laisser sécher.

14. Un procédé de revêtement ou de liaison ou d'impregnation d'un substrat, dans lequel le substrat est revêtu ou lié ou imprégné avec un polymère produit selon le procédé comme revendiqué dans l'une

quelconque des revendications 1 à 10 avec facultativement traitement du polymère avec le sesquicarbonate de sodium ou un équivalent chimique de celui-ci.

**Patentansprüche für die Vertragsstaaten: BE CH DE FR GB IT LI NL SE**

1. Verbindungen der Formel

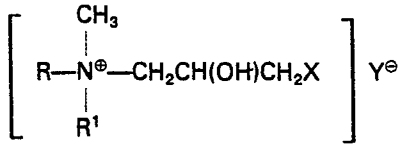

oder der Formel

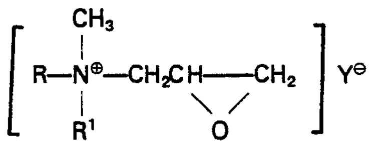

worin

R eine ethylenisch ungestättigte organische Gruppe ist,

$R^1$ eine lineare $C_1$—$C_4$-Alkylgruppe, gegebenenfalls Hydroxy-substituiert, ist,

X Chlor, Brom oder Jod ist und

$Y^\ominus$ ein grenzflächenaktives Anion ist.

2. Verbindungen nach Anspruch 1, worin

R $H_2C{=}C(R^4)$—C(O)Z—A— ist und

$R^4$ Wasserstoff oder Methyl ist,

Z Sauerstoff oder —$NR^5$— ist

worin

$R^5$ Wasserstoff oder eine Kohlenwasserstoffgruppe mit bis zu 10 Kohlenstoffatomen, vorzugsweise Wasserstoff oder Methyl, ist, und

A eine ($C_2$—$C_4$)-Alkylengruppe mit wenigstens zwei Kohlenstoffatomen in einer Kette zwischen den angrenzenden Z und $N^\oplus$ ist oder A eine Polyoxyalkylengruppe der Formel

$$—(CH_2CH_2O)_xCH_2CH_2—$$

sein kann worin

x eine ganze Zahl von 1 bis 11 ist.

3. Verbindungen nach Anspruch 2, worin Z O ist und X Chlor oder Brom ist.

4. Verbindungen nach Anspruch 3, worin $R^1$ Methyl ist, A eine Ethylengruppe ist, X Chlor ist und $Y^\ominus$ ein Sulfat oder Sulfonat oder Phosphat oder Sulfosuccinat ist.

5. Verbindungen nach Anspruch 2, worin Z—$NR^5$— ist und X Chlor oder Brom bedeutet.

6. Verbindungen nach Anspruch 5, worin $R^1$ Methyl ist, A eine Ethylengruppe oder eine Propylengruppe ist, X Chlor ist, $R^5$ Wasserstoff oder Methyl ist und $Y^\ominus$ ein Sulfat oder Sulfonat oder Phosphat oder Sulfosuccinat ist.

7. Verbindungen nach Anspruch 1, worin R der Struktur

$$R^3—CH_2—(CHR^2)_n—CH_2—$$

entspricht, worin

n 0 oder 1 ist,

$R^2$ H oder OH ist und

$R^3$ eine Alkenoxygruppe ist, die eine Allylgruppe oder eine Carbalkenoxygruppe enthält, die eine Doppelbindung enthält, die funktionell einer isolierten Vinylgruppe äquuivalent ist.

8. Verbindungen nach Anspruch 7, worin

$R^1$ Methyl ist,

$Y^\ominus$ ein Sulfat oder Sulfonat oder Phosphat oder Sulfosuccinat ist und

$R^3$ derartig ist, daß die Verbindung

(i) ein Ether von Allylalkohol oder

(ii) ein Ester einer der folgenden Säuren ist: Monomethylester von Maleinsäure, Vinylessigsäure und 5-Norbornen-2-carbonsäure.

9. Verbindungen nach Anspruch 1, worin R der Struktur

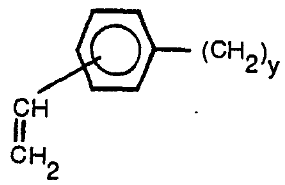

entspricht, worin y eine ganze Zahl von 1 bis 4 ist

10. Verbindungen nach Anspruch 9, worin
X Chlor der Brom ist,
$R^1$ Methyl ist und
$Y^\ominus$ ein Sulfat, Sulfonat, Phosphat oder Sulfosuccinat ist.

11. Polymeres, enthaltend oder bestehend aus Einheiten einer oder mehrerer Verbindungen gemäß einem der vorhergehenden Ansprüche.

12. Polymeres nach Anspruch 11, das außerdem Einheiten eines oder mehrerer anderer monoethylenisch ungesättigter Monomerer enthält.

13. Polymeres nach Anspruch 11 oder 12, das außerdem Einheiten eines oder mehrerer anderer quaternärer Ammoniummonomerer enthält.

14. Polymerisierbare Masse aus einer oder mehreren Verbindungen gemäß einem der Ansprüche 1 bis 10 in einem geeignete Medium, gegebenenfalls zusammen mit wenigstens einem anderen monoethylenisch ungesättigten Monomeren mit einer Gruppe der Formel

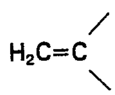

15. Artikel aus einem Substrat, das mit einem Polymeren gemäß einem der Ansprüche 11 bis 13 beschichtet oder imprägniert ist.

16. Verfahren zum Härten eines Polymeren durch Einstellen eines wäßrigen Systems, das ein Polymeres gemäß einem der Ansprüche 11 bis 13 enthält, auf einen pH von 9 oder mehr and Trocknen oder Trocknenlassen desselben.

**Patentansprüche für den Vertragsstaat: AT**

1. Polymerisationsverfahren zur Herstellung eines Polymeren durch Polymerisation einer oder mehrerer Verbindungen der Formel

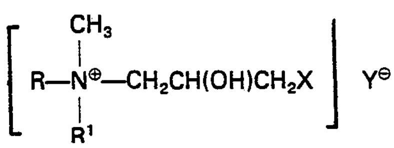

oder der Formel

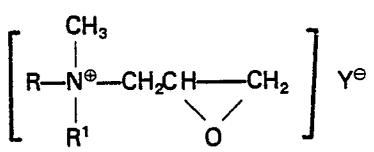

worin
R eine ethylenisch ungestättigte organische Gruppe ist,
$R^1$ eine lineare $C_1$—$C_4$-Alkylgruppe, gegebenenfalls Hydroxy-substituiert, ist,
X Chlor, Brom oder Jod ist und
$Y^\ominus$ ein grenzflächenaktives Anion bedeutet, gegebenenfalls zusammen mit wenigstens einem anderen monoethylenisch ungesättigten Monomeren mit einer Gruppe der Formel

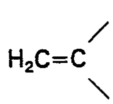

2. Verfahren nach Anspruch 1, worin R für $H_2C{=}C(R^4){-}C(O)Z{-}A{-}$ steht und
$R^4$ Wasserstoff oder Methyl ist,
Z Sauerstoff oder $-NR^5-$ bedeutet, wobei
$R^5$ Wasserstoff oder eine Kohlenwasserstoffrest mit bis zu 10 Kohlenstoffatomen, vorzugsweise Wasserstoff oder Methyl, ist, und
A eine $(C_2-C_4)$-Alkylengruppe mit wenigstens 2 Kohlenstoffatomen in einer Kette zwischen den angrenzenden Z und $N^{\oplus}$ ist oder A eine Polyoxyalkylengruppe der Formel

$$-(CH_2CH_2O)_xCH_2CH_2-$$

sein kann worin
x eine ganze Zahl von 1 bis 11 ist.

3. Verfahren nach Anspruch 2, worin Z O ist und X Chlor oder Brom bedeutet.

4. Verfahren nach Anspruch 3, worin $R^1$ Methyl ist, A eine Ethylengruppe ist, X Chlor ist und $Y^{\ominus}$ ein Sulfat oder Sulfonat oder Phosphat oder Sulfosuccinat ist.

5. Verfahren nach Anspruch 2, worin $Z{-}NR^5-$ ist und X Chlor oder Brom bedeutet.

6. Verfahren nach Anspruch 5, worin $R^1$ Methyl ist, A eine Ethylengruppe oder eine Propylengruppe ist, X Chlor ist, $R^5$ Wasserstoff oder Methyl ist und $Y^{\ominus}$ ein Sulfat oder Sulfonat oder Phosphat oder Sulfosuccinat ist.

7. Verfahren nach Anspruch 1, worin R der Struktur

$$R^3{-}CH_2{-}(CHR^2)_n{-}CH_2-$$

entspricht, worin
n 0 oder 1 ist,
$R^2$ H oder OH ist und
$R^3$ eine Alkenoxygruppe ist, die eine Allylgruppe oder eine Carbalkenoxygruppe enthält, die eine Doppelbindung aufweist, die funktionell einer isolierten Vinylgruppe äquuivalent ist.

8. Verfahren nach Anspruch 7, worin
$R^1$ Methyl ist,
$Y^{\ominus}$ ein Sulfat oder Sulfonat oder Phosphat oder Sulfosuccinat ist und
$R^3$ derartig ist, daß die Verbindung
(i) ein Ether von Allylalkohol oder
(ii) ein Ester einer der folgenden Säuren ist: Monomethylester von Maleinsäure, Vinylessigsäure und 5-Norbornen-2-carbonsäure.

9. Verfahren nach Anspruch 1, worin R der Struktur

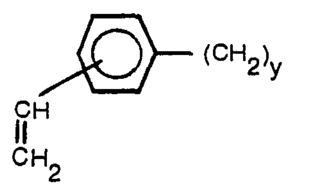

entspricht, worin y eine ganze Zahl von 1 bis 4 ist

10. Verfahren nach Anspruch 9, worin
X Chlor der Brom ist,
$R^1$ Methyl ist und
$Y^{\ominus}$ ein Sulfat oder Sulfonat oder Phosphat oder Sulfosuccinat ist.

11. Polymerisierbare Masse, die für eine Verwendung in einem Verfahren gemäß einem der vorhergehenden Ansprüche geeignet ist, aus einer oder mehreren Verbindungen gemäß einem der Ansprüche 1 bis 10 in einem geeigneten Medium, gegebenenfalls zusammen mit wenigstens einem anderen monoethylenisch ungesättigten Monomeren mit einer Gruppe der Formel

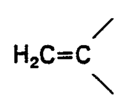

12. Verfahren zur Herstellung einer Verbindung der Formel

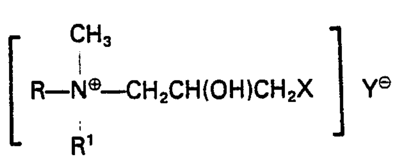

oder der Formel

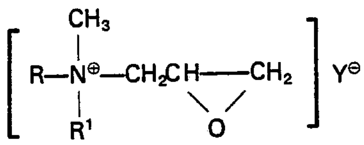

worin

R eine ethylenisch ungestättigte organische Gruppe ist,

$R^1$ eine lineare $C_1$—$C_4$-Alkylgruppe, gegebenenfalls Hydroxy-substituiert, ist,

X Chlor, Brom oder Jod ist und

$Y^\ominus$ ein grenzflächenaktives Anion ist,

wobei ein wasserstoffsäures Salz oder ein grenzflächenaktives Salz einer Verbindung der Formel

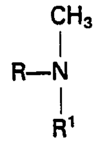

mit einem Epihalogenhydrin oder einem funktionellen Äquivalent davon zur Gewinnung einer quaternären Halogenhydroxypropyldialkylammoniumverbindung umgesetzt wird und erforderlichenfalls saure Salzanionen darin durch grenzflächenaktive Anionen ersetzt werden.

13. Verfahren zur Härtung eines Polymeren durch Einstellen des pH eines wäßrigen Systems, das ein Polymeres enthält, das nach einem Verfahren gemäß einem der Ansprüche 1 bis 10 hergestellt worden ist, auf einen Wert von 9 oder darüber und Trocknen desselben oder Trocknenlassen desselben.

14. Verfahren zum Beschichten oder zum Verbinden oder zum Imprägnieren eines Substrats, wobei das Substrat mit einem Polymeren überzogen oder verbunden oder imprägniert wird, das nach dem Verfahren gemäß einem der Ansprüche 1 bis 10 hergestellt wird und gegebenenfalls das Polymere mit Natriumsesquicarbonat oder einem chemischen Äquivalent davon behandelt wird.